# EUROPEAN PATENT APPLICATION

(11) **EP 1 903 282 A2**
(43) Date of publication of application: **26.03.2008**
(21) Application number: 07116514.6
(22) Date of filing: 14.09.2007
(51) Int. Cl.: F23C 9/00, F23N 5/00

(54) **Method and apparatus for optimizing high FGR rate combustion with laser-based diagnostic technology**

(30) Priority: 22.09.2006 US 826645 P; 27.11.2006 US 563381
(71) Applicant: L'AIR LIQUIDE, Société Anonyme pour l'Etude et l'Exploitation des Procédés Georges Claude, 75007 Paris (FR)
(72) Inventor: Hu, Tailai, Greenville, IL 29615 (US); Pranda, Pavol, Hockessin, DE 19707 (US); Von Drasek, William A., Oak Forest, IL 60452 (US)
(74) Representative: Conan, Philippe Claude

(57) **Abstract**

A method and apparatus for optimizing boilers with high flue gas recirculation rate based with laser based diagnostic technology. A tunable diode laser beam (203) is emitted from a launcher (202), is altered by the absorption spectra of the gas species that it intersects, and encounters a receiver (204). The signal is processed, then the information is used to modulate the flowrate of hydrogen blended fuel or oxygen enriched air into the burner (110).

## Description

This application claims the benefit of U.S. Provisional Application No. 60/826,645, filed September 22, 2006, the entire contents of which are incorporated herein by reference.

The generation of electric power can be a challenging endeavor, often requiring the production of varying amounts of power during different times of day, seasons, or local load fluctuations. In contrast, it is well understood that the optimum efficiencies are typically achieved by operating at steady state or near-steady state conditions. Thus, peak efficiency, and such a varying load, are often not compatible with these widely varying demands. This problem can be addressed by providing various combinations of plants that are either on standby or running. Even if those that are running are not as efficient, if they are providing a smaller portion of the overall electrical load to the system. Gas turbines are well suited for these "peaking" applications because of the ease with which they can be brought on-line.

Combined cycle power generation plants meet the needs of increased efficiency and flexibility because they blend the best features of peaking and baseload generation by combining a steam turbine system with one or more gas turbines. As previously mentioned, gas turbines have short start up times and respond well to changes in power demands. Gas turbines are, however, relatively inefficient for power generation in simple cycle applications. In contrast, steam turbines are not well-suited for fast start up and for response to varying demand. Combined cycle plants can achieve better efficiencies by utilizing the waste heat from the exhaust of gas turbines to generate steam for the steam turbine, and are among the most efficient means available for producing electricity.

The overall efficiency of gas turbines is a function of the compressor and turbine efficiencies, ambient air temperature, turbine inlet temperature, overall pressure ratio and the type of cycle used. Certain of these conditions are not controllable by the plant design or operation, but are determined by the equipment design. However, it is possible to control the temperature of the gas entering the combustor. The higher this temperature, the higher the efficiency of the turbine cycle. Thus, it is a one object of the present invention to increase the temperature of the gas entering the combustor.

A cogeneration plant can be operated with gas turbine on or off. When gas turbine is in operation, high temperature exhaust gas from gas turbine is fed into heat recovery steam generator The energy contained in the gas turbine exhaust gas is recovered in heat exchangers to produce steam for either processing (i.e. a cogeneration cycle) or for driving a steam turbine (i.e. a combined cycle). When the gas turbine is off, a diverter damper can by-pass exhaust gas to a by-pass stack, which prevents any air from leaking into gas turbine when fresh air fan is running.

A cogeneration plant may be operated with the gas turbine off, by incorporating an auxiliary fan to provide an air flow through the heat recovery boiler. Such a system is known in the art as operating in Fresh Air mode, or alternately Fresh Air Firing mode. Operating a cogeneration system under such a Fresh Air mode gives the operator the flexibility of being able to separate the production of electricity from the production of the steam This is particularly interesting in the regions where power market is deregulated and power prices fluctuate over time. In such a region, there is a decoupling of steam demand and desired electrical power output.

To improve the efficiency under Fresh Air mode for a new cogeneration system, two types of technologies can be used; flue gas recirculation, and a boiler with a combustion chamber. For an existing cogeneration unit, flue gas recirculation will almost always be a far easier and cheaper technology for retrofit.

Generally, a higher recirculation rate of flue gas can yield less stack loss and improve the efficiency of a cogeneration system, and also reduce emissions. However, with the increase of the recirculation rate of flue gas, oxygen concentration at the upstream of the burner drops. Excessive CO emission and combustion stability appear to be another concern. Thus, maintaining an efficient and stable combustion at the high recirculation rates of flue gas is problematic.

Extractive sampling or hybrid in-situ ex-situ systems are common technologies within the industry for monitoring cogeneration systems for gas species concentrations. One drawback in either of these cases is that the measurement is done at a single point. Due to the large size of the combustion zone within a heat recovery stream generator, significant non-uniformity of gas species concentration and gas temperature can exist. Also, simply installing more sampling probes can create obstructions to the gas flow. When sampling probes are installed in such a high temperature flame region, maintenance issues can be significant, and must be considered. In addition, due to long sampling lines, the extractive sampling technology with conventional analyzers often has relatively long delay time, which can be up to minutes depending on the system.

With an increase in recirculation rate of the flue gas, the oxygen concentration upstream of the burner decreases. Excessive CO emissions and combustion instability are other concerns. Hydrogen-blended fuels or oxygen-enriched air can be used to maintain an efficient and stable combustion with little effect on emissions. However, in order to improve the overall performance at the high percentage flue gas recirculation that are of interest, the fuel or oxygen-enriched air inlet flow has to be accurately measured and controlled. Process parameters, such as O₂, CO, and NOₓ concentrations, and gas temperature, are key indicators, and are useful for combustion adjustments to improve the performance. To optimize the combustion, it is desirable to monitor these important parameters and to couple them with a process control strategy.

Thus, there is a need in the industry for a system that can be retrofitted into existing combined cycle, or cogeneration plants, that will allow real-time, non-intrusive, in-situ measurement and control of gas parameters, such as temperature and composition.

The present invention is directed toward an optimized high flue gas recirculation rate combustion diagnostic apparatus. The apparatus comprises a combustion zone with gas species to be measured, and burners. The apparatus also comprises a launcher for emitting a tunable diode laser beam at a sequence of wavelengths that correspond to an absorption spectra of said gas species. The apparatus also comprises a receiver for receiving said tunable diode laser beam, and for generating an output signal corresponding to a temperature and/or a degree of absorption encountered. The apparatus comprises a control system for receiving said output signal, wherein said control system thereby regulates the inlet flow of fuel or oxidant to said combustion zone.

The present invention is also directed toward an optimized high flue gas recirculation rate combustion diagnostic method. This method comprises providing a combustion zone with gas species to be measured, and burners. The method also comprises emitting a tunable diode laser beam from a launcher, wherein said tunable diode laser beam has a sequence of wavelengths that correspond to an absorption spectra of said gas species. The method also comprises receiving said tunable diode laser beam in a receiver, and generating an output signal corresponding to a temperature and/or a degree of absorption encountered. The method also comprises regulating the inlet flow of fuel or oxidant into said combustion zone with a control system for receiving said output signal.

### Brief Description of Drawings

For a further understanding of the nature and objects for the present invention, reference should be made to the following detailed description, taken in conjunction with the accompanying drawings, in which like elements are given the same or analogous reference numbers and wherein:
- Figure 1 is a schematic illustration of one embodiment in accordance with the present invention;
- Figure 2 is a schematic illustration of another embodiment in accordance with the present invention; and
- Figure 3 is a schematic illustration of a the duct burner as positioned in the transition duct between the gas turbine and the heat recovery stream generator, in accordance with one embodiment the present invention.

A cogeneration unit with flue gas recirculation can be continuously operated under Fresh Air mode for a long period with a competitive efficiency that is roughly comparable to the typical value for a conventional boiler. While keeping the total flow of flue gas that exits the stack virtually constant, an increase in flue gas recirculation rate yields less stack loss and reduces emissions. However, with the increase of the flue gas recirculation rate, the oxygen content to the inlet of duct burners can easily decrease to a level that causes excessive CO emission and result in combustion instability. To overcome this difficulty, a practical solution is to add a more reactive fuel, such as hydrogen, to the main fuel (typically natural gas). A system that utilizes a fuel blended with hydrogen in the combustion system, can be used to maintain an efficient and stable combustion in heat recovery steam generator. Such a system will also reduce emissions at these high flue gas recirculation rates. In addition, the use of hydrogen as part of the fuel blend, the greenhouse gas (CO₂) production is reduced. Therefore, this solution can serve as a transition strategy to a carbon free energy system at some point in the future.

A hydrogen fuel blend combustion system is proposed to solve the problem of combustion instability and to improve the efficiency of a cogeneration system at a high flue gas recirculation rate. In this solution, the fresh air is mixed with a part of the total flue gas and then this mixture is recycled back to the inlet duct of Heat Recovery Steam Generator. The more reactive fuel, such as hydrogen (or hydrogen/CO), is blended with the primary fuel, or fuels, and then the blended fuel is injected into combustion chamber. In one embodiment, a stable and efficient combustion can be maintained when a large portion of flue gas is recycled, and the emissions (NOx and CO) are also reduced to the required regulation levels at the same time.

To improve the overall performance, it is critical to accurately control the fuel or oxygen-enriched air inlet flow. The important processing parameters, such as O₂, CO, and NOₓ concentrations, and gas temperature, are linked to the performance. To solve this issue, a laser-based diagnostic technology, such as Tunable Diode Laser (TDL) sensors, can provide the non-intrusive in-situ fast response measurements of important gas species concentrations and gas temperature. The sensors are coupled with feedback control to accurately and timely adjust gas and fuel inlet flows, which can improve the overall performance of a cogeneration system at a high percentage flue gas recirculation.

A laser-based diagnostic technology, such as Tunable Diode Laser (TDL) sensor, can provide the non-intrusive in-situ fast response measurements of important gas species concentrations and gas temperature at different cross sections in the combustion chamber. The sensors are then coupled with feedback control to accurately and timely adjust the inlet flow rates of the hydrogen-blended fuel or oxygen-enriched air. The ability of monitoring key process parameters coupled with the feedback control of inlet flows plays an important role for maintaining an efficient and stable combustion with limited emissions at a high percentage flue gas recirculation in a cogeneration system.

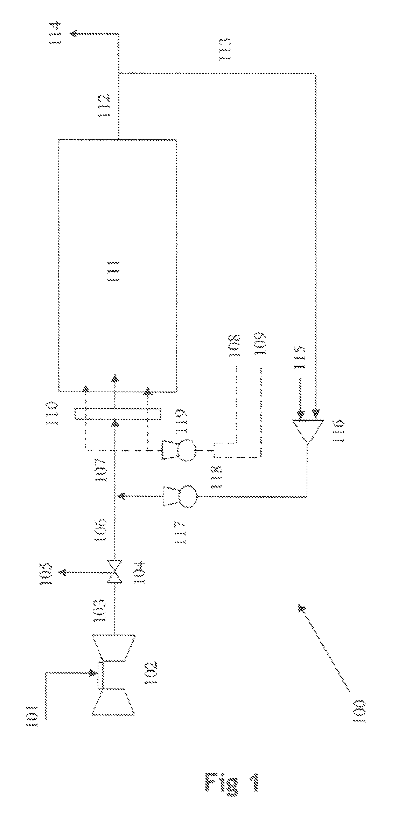

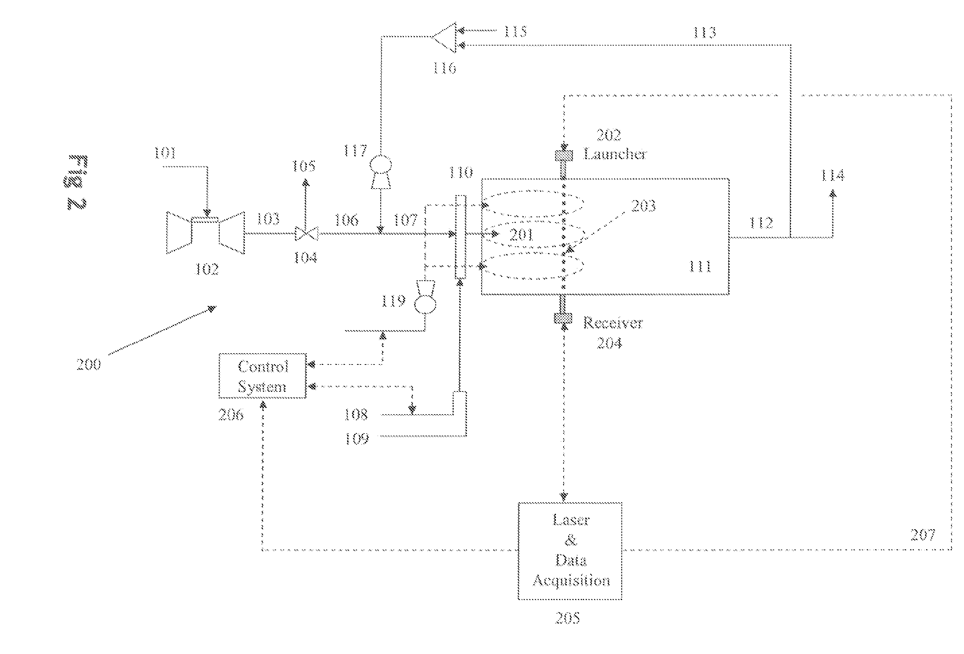

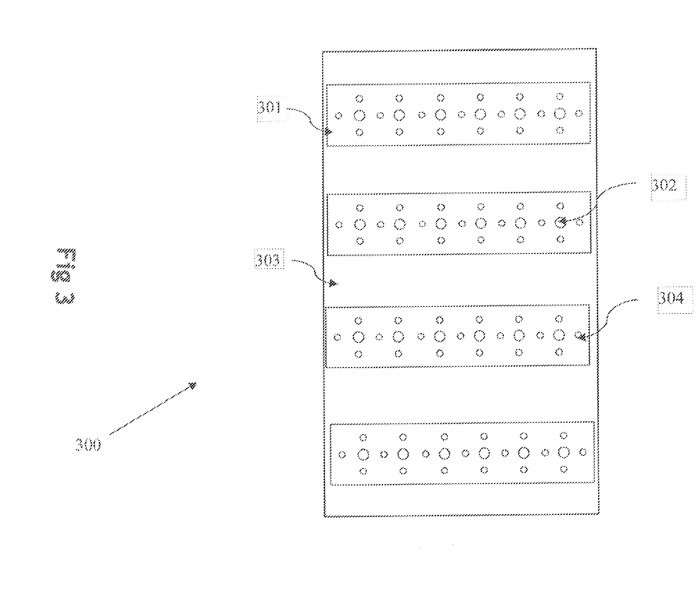

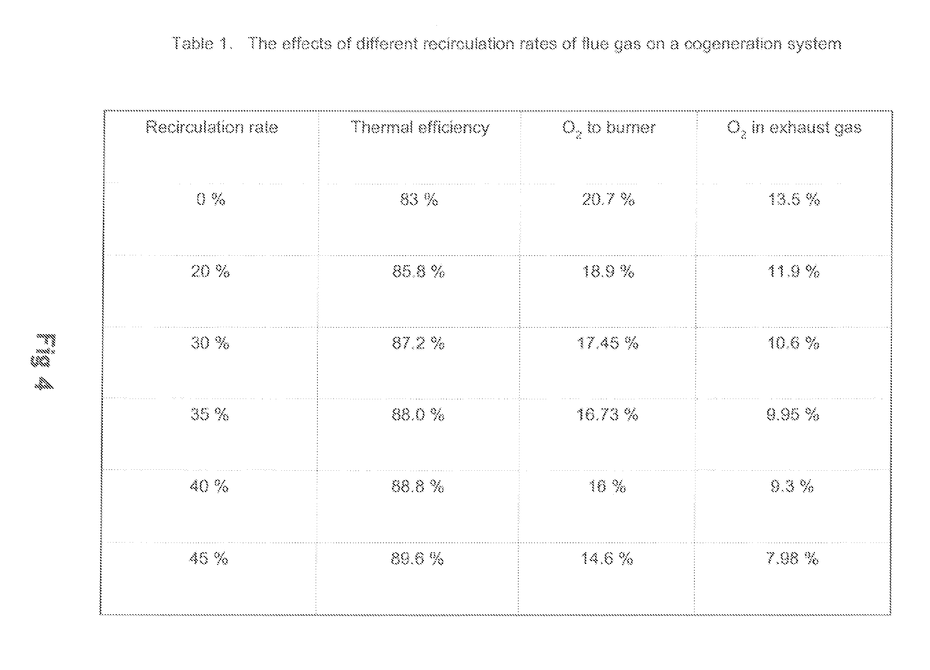

Turning to Figure 1, schematic diagram **100,** which represents a cogeneration system utilizing a hydrogen blended combustion system is shown.

For a cogeneration unit that is operating in Gas Turbine mode (i.e. with the gas turbine on), primary gas turbine fuel **101** is injected into gas turbine **102** and the high temperature exhaust gas **103** exits the gas turbine **102.** When operating in the Gas Turbine mode, the damper **104** remains open, and all the exhaust gas **103** is directed toward the heat recovery steam generator **111,** where this heat content is exploited to produce steam. The damper **104** and by-pass stack **105** will be used during the switching period between Gas Turbine mode and Fresh Air mode (i.e. when the gas turbine is off). When operating in Fresh Air mode, fresh air **115** is fed into the heat recovery steam generator **111** and the damper **104** can prevent air from leaking into the gas turbine ducting.

Hydrogen fuel **108** may be blended with primary HRSG fuel **109,** and then burned in duct burner **110.** As the exhaust gas **112** exits the heat recovery steam generator **111,** instead of being completely exhausted into main stack **114,** a portion of the flue gas **113** is recycled back to displace an equivalent volume of fresh air **115.**

The hydrogen (or hydrogen/CO) blended fuel **118** may go through a fan **119** to increase the pressure for better injection and mixing. After being burned in duct burner **110,** the heated gas stream enters heat recovery steam generator **111,** where it mixes with gas turbine exhaust gas **103.** The velocity with which blended fuels **118** are introduced into the duct burner **110** depends on the structure of duct burner, the size and the geometry of the combustion zone of the heat recovery steam generator, the velocity and the temperature of combustion gases, and the structure of heat recovery steam generator.

For a cogeneration unit that is operating in Fresh Air mode (i.e. with the gas turbine off), the damper **104** will be closed. When operating in Fresh Air mode, fresh air **115** is fed into the heat recovery steam generator **111** and the damper **104** can prevent air from leaking into the gas turbine ducting. Fresh air **115,** and the recirculated flue gas to be discussed below, may go through a fan **117** to increase the pressure as needed.

Hydrogen fuel **108** may be blended with primary HRSG fuel **109,** and then burned in duct burner **110.** As the exhaust gas **112** exits the heat recovery steam generator **111,** instead of being completely exhausted into main stack **114,** a portion of the flue gas **113** is recycled back to displace an equivalent volume of fresh air **115.**

The hydrogen (or hydrogen/CO) blended fuel **118** may go through a fan **119** to increase the pressure for better injection and mixing. After being burned in duct burner **110,** the heated gas stream enters heat recovery steam generator **111,** where it mixes with gas turbine exhaust gas **103.** The velocity with which blended fuels **118** are introduced into the duct burner **110** depends on the structure of duct burner, the size and the geometry of the combustion zone of the heat recovery steam generator, the velocity and the temperature of combustion gases, and the structure of heat recovery steam generator.

Shown in Figure 2 is a schematic diagram of a cogeneration system utilizing one embodiment of the laser-based diagnostic technology for optimizing combustion at a high flue gas recirculation rate.

The laser launcher **202** and laser receiver **204** are mounted at the downstream of duct burners **110** on opposite side walls of combustion zone of the heat recovery steam generator **111.** To have improved control of the combustion process, one preferred location of monitoring gas species concentrations is close to the end of the flame **201.** At the downstream of flame **201,** the combustion gases start to mix with the surrounding extra air/flue gas to achieve a uniform distribution of gas species concentrations and temperature as the combustion gases exit the combustion zone of the heat recovery steam generator **111** and enter the heat transfer sections of the heat recovery steam generator.

The laser beam **205** is transported to the launcher module **202** by fiber optic cable **207.** The laser beams **203** are multiplexed to monitor gas species concentrations and gas temperature for different rows of duct burner **110.** This may require different sets of launcher **202** and receiver **204** modules mounted on the opposite side of the combustion zone of the heat recovery steam generator **111.** However, only one signal laser and acquisition system **205** is required. The beams **203** are launched across the combustion zone of the heat recovery steam generator **111** and collected in the receiver module **204** at the opposite side. The resulting measurement provides a path averaged concentration and/or temperature of the gas volume that the laser beam **203** intercepts. The signal is collected in the data acquisition unit **205** where the resulting measured laser beam attenuation can be related to the concentration of a resonant absorption transition. The measured process parameters are sent to a control system **206** to perform the control of the inlet flow of the hydrogen-blended fuel **108, 109** or oxygen-enriched air **119.** As used within this application, oxygen-enriched air contains greater than atmospheric concentrations of oxygen.

The monitored gas species include CO, H₂O, and O₂. By monitoring O₂ and CO, the NO can also be indirectly monitored to some extent. The combustion gas temperature is also measured. When multiple water lines are used, the non-uniformity of gas temperature along the laser path **203** can also be evaluated by comparing the temperatures calculated from each water line. If the gas temperature is uniform along the laser path **203** in the combustion zone of heat recovery steam generator **111,** the calculated temperatures from all water lines will be equal.

For the lasers generating multiple water lines, two options are available. One option is to use different lasers and another option is to use one sweeping laser.

A cross section **300** of duct burner **110,** as it is positioned within the transition duct between gas turbine **102** and heat recovery steam generator **111** is shown in Figure 3. A portion of cross section **300** is occupied by the rows of duct burner **301.** The mixture of air and flue gas **107** passes through the remaining portion of the cross section **303.** If hydrogen-blended fuel is used, the fuel may be injected into the combustion zone of heat recovery steam generator **111** through the fuel nozzles **302.** In another embodiment, the oxygen-enriched air is injected through separate nozzles **304.** The optimal air/fuel ratio, velocity ratio and the turbulent intensities (of the blended fuels **118** and/or the mixture of air/flue gas **107)** are dependent on the configuration of the cogeneration system.

As shown in Table 1 in Figure 4, with the increase of the percentage of the recirculated flue gas, the thermal efficiency of the heat recovery steam generator increases. Simultaneously, the oxygen content to the burner decreases with an increase of flue gas recirculation rate. When a hydrogen-blended combustion system is used, a stable and efficient combustion can be maintained even if the oxygen content of the mixed gas of air/flue gas **107** at the upstream of the burners drops to a level that is not acceptable for a stable combustion. The last three rows of Table 1, generally represent cases in which a hydrogen-blended combustion system may be needed. The percentages of the blended hydrogen fuel depend on the oxygen content of the mixed gas of air/flue gas **107** at the upstream of the burners and several other factors (such as the structure of duct burner, the size and the geometries of the combustion chamber, the velocity and the temperature of combustion gases). It is anticipated that a hydrogen fuel ratio of up to 20% is desirable for this application.

## Claims

1. An optimized high flue gas recirculation rate combustion diagnostic apparatus comprising:
a) a combustion zone comprising gas species to be measured, wherein said combustion zone comprises burners;
b) a launcher for emitting a tunable diode laser beam at a sequence of wavelengths that correspond to an absorption spectra of said gas species;
c) a receiver for receiving said tunable diode laser beam, and for generating an output signal corresponding to a temperature and/or a degree of absorption encountered; and
d) a control system for receiving said output signal, wherein said control system thereby regulates the inlet flow of fuel or oxidant to said combustion zone.

2. The apparatus of claim 1, wherein said fuel comprises a blend of hydrogen and natural gas.

3. The apparatus of claim 1, wherein said oxidant comprises oxygen enriched air.

4. The apparatus of claim 1, wherein said launcher is mounted downstream of said burners.

5. The apparatus of claim 1, wherein said receiver is mounted downstream of said burners.

6. The apparatus of claim 1, wherein said launcher receives said tunable diode laser beam by means of a fiber optic cable.

7. The apparatus of claim 1, wherein said burner comprises at least two rows, and wherein said laser beam is multiplexed to generate said output signal for each of said rows.

8. The apparatus of claim 1, wherein said output signal is a path averaged concentration.

9. The apparatus of claim 1, wherein said gas species are selected from the group consisting of carbon monoxide, water and oxygen.

10. An optimized high flue gas recirculation rate combustion diagnostic method comprising:
a) providing a combustion zone comprising gas species to be measured, wherein said combustion zone comprises burners;
b) emitting a tunable diode laser beam from a launcher, wherein said tunable diode laser beam has a sequence of wavelengths that correspond to an absorption spectra of said gas species;
c) receiving said tunable diode laser beam in a receiver, and generating an output signal corresponding to a temperature and/or a degree of absorption encountered; and
d) regulating the inlet flow of fuel or oxidant into said combustion zone with a control system for receiving said output signal.

11. The method of claim 10, wherein said fuel comprises a blend of hydrogen and natural gas.

12. The method of claim 10, wherein said oxidant comprises oxygen enriched air.

13. The method of claim 10, wherein said launcher is mounted downstream of said burners.

14. The method of claim 13, wherein said burner comprises a flame, and where said launcher is mounted in such a way that the tunable diode laser monitors gas species concentrations at the end of said flame.

15. The method of claim 10, wherein said receiver is mounted downstream of said burners.

16. The method of claim 10, wherein said launcher receives said tunable diode laser beam by means of a fiber optic cable.

17. The method of claim 10, wherein said burner comprises at least two rows, and wherein said laser beam is multiplexed to generate said output signal for each of said rows.

18. The method of claim 10, wherein said output signal is a path averaged concentration.

19. The method of claim 10, wherein said gas species are selected from the group consisting of carbon monoxide, water and oxygen.
